# EUROPEAN PATENT SPECIFICATION

(11) **EP 2 833 046 B1**
(45) Date of publication and mention of the grant of the patent: **01.03.2017**
(21) Application number: 13769498.0
(22) Date of filing: 14.03.2013
(51) Int. Cl.: F17C 9/02, B63B 25/16, B63H 21/38, G05D 7/06, G01F 5/00, B63H 21/14

(54) **VESSEL, LIQUEFIED GAS VAPORIZATION DEVICE, AND CONTROL METHOD THEREFOR AS WELL AS IMPROVEMENT METHOD THEREFOR**
GEFÄSS, FLÜSSIGGASVERDAMPFUNGSVORRICHTUNG UND STEUERVERFAHREN DAFÜR SOWIE VERBESSERUNGSVERFAHREN DAFÜR
RECIPIENT, DISPOSITIF DE VAPORISATION DE GAZ LIQUÉFIÉ, PROCÉDÉ DE CONTRÔLE ET PROCÉDÉ D'AMÉLIORATION CORRESPONDANTS

(30) Priority: 30.03.2012 JP 2012080334
(43) Date of publication of application: 04.02.2015
(73) Proprietor: Mitsubishi Heavy Industries, Ltd., Tokyo 108-8215 (JP)
(72) Inventor: OKA, Masaru, Tokyo 108-8215 (JP)
(74) Representative: Henkel, Breuer & Partner
(86) International application number: PCT/JP2013/057269
(87) International publication number: WO 2013/146316

(56) References cited:
- JP-A- H09 125 077
- JP-A- 2007 024 198
- JP-A- 2009 092 163
- JP-A- 2009 204 026
- JP-A- 2010 025 152
- JP-A- 2011 105 955
- US-A- 4 341 107
- US-A1- 2007 193 628
- US-A1- 2011 023 491

## Description

### Technical Field

The present invention relates to a vessel including a liquefied gas storage tank, a liquefied gas vaporization device, and a control method therefor as well as an improvement method therefor.

### Background Art

For example, as shown in the following JP 2006-177618A (Refer to Fig. 1), an LNG carrier including an LNG tank (cargo tank), which stores LNG (liquefied natural gas) that is liquefied gas, is provided with an LNG vaporizer that guides and vaporizes LNG within the LNG tank. An LNG carrier on which a large-sized LNG vaporizer (carburetor) and a small-sized LNG vaporizer for generating fuel gas are mounted is also well known.

If one small-sized LNG vaporizer and one large-sized LNG vaporizer are mounted, an installation space becomes large and initial investment increases. Thus, it is preferable that the large-sized LNG vaporizer also serve as the small-sized LNG vaporizer.
US 2011/023491A1 discloses a system and method for supplying fuel to a gas turbine including a piping containing fuel at a certain high pressure, a pressure reducing valve for reducing the pressure of the fuel, and a heat exchanger downstream of the pressure reducing valve for heating the wet saturated fuel to produce superheated fuel which is then supplied to the gas turbine.

### Summary of Invention

### Technical Problem

However, since the large-sized LNG vaporizer is used mainly when a gas-replacing gas of the LNG tank is generated, the required amount of the gas is several times larger than that of the small-sized LNG vaporizer for generating fuel gas. Accordingly, generating a small amount of gas required by the small-sized LNG vaporizer using the large-sized LNG vaporizer creates problems from a viewpoint of controllability as described below.

Generally, steam heating type and shell and tube type heat exchangers are employed as the LNG vaporizers, LNG passes through a tube side, and a saturated steam atmosphere is formed on a shell side. The heated LNG comes out of a heat exchanger in a superheated gas state, and outlet temperature is adjusted by bypassing and spraying a portion of LNG at a heat exchanger inlet to the gas in this superheated gas state.

Additionally, the amount of vaporized gas is controlled in accordance with a setting value that depends on a mass flow rate after a volume flow rate is measured by an orifice meter or venturi tube flowmeter installed in an outlet pipe and converted into the mass flow rate. An LNG line on the side of the heat exchanger inlet is provided with a flow rate adjusting valve, and an LNG line of a temperature regulating bypass flow path is provided with a temperature regulating valve. Since the flow rate adjusting valves and the temperature regulating valve are designed and determined in size in accordance with rated flow rates, when an extremely small amount of LNG passes through the valves, a sufficient LNG flow rate adjusting function or a sufficient gas temperature regulating function cannot be exhibited. Additionally, in a low flow rate, the detection of the gas flow rate by the flowmeter becomes inaccurate, and management of the amount of vaporization is very difficult.

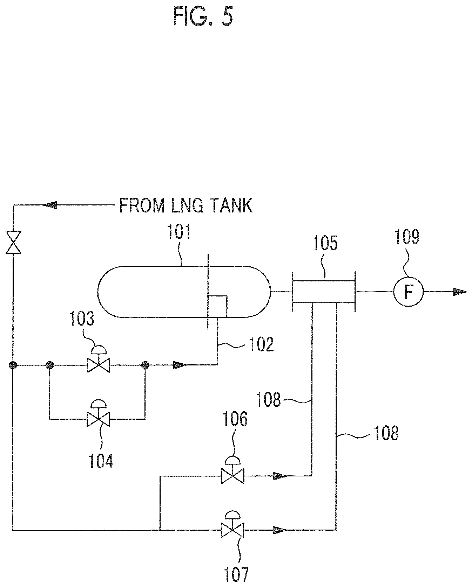

Thus, as shown as a reference example in Fig. 5, a configuration in which the large-sized LNG vaporizer also covers the flow rate range of the small-sized LNG vaporizer is considered. As shown in this drawing, a flow rate adjusting valve 103 for a high flow rate and a flow rate adjusting valve 104 for a low flow rate are provided in parallel on an LNG line 102 on an inlet side of an LNG vaporizer 101. Additionally, a temperature regulating valve 106 for a high flow rate and a temperature regulating valve 107 for a low flow rate are provided in parallel on a temperature regulating bypass LNG line 108 that sprays LNG to a temperature regulating desuperheater 105. In this way, if the flow rate adjusting valve and the temperature regulating valve are classified and configured for a high flow rate and a low flow rate, it is possible to deal with a wide flow rate range.

However, since flow rate is measured by the flowmeter 109 on an outlet side of the desuperheater 105, a problem that flow rate measurement precision in the low flow rate is poor still remains.

The invention has been made in view of such circumstances, and an object thereof is to provide a vessel including a liquefied gas vaporization device capable of flow rate control or temperature control with high precision even when a range flow rate range is broad, a liquefied gas vaporization device, and a control method therefor as well as an improvement method therefor.

In order to solve the above problems, the invention provides the vessel as defined by claim 5, the liquefied gas vaporization device as defined by claim 1, and the control method therefor as defined by claim 6 as well as the improvement method therefor as defined by claim 7.

That is, the vessel according to the invention includes a liquefied gas vaporization device of the invention and a main engine having the liquefied fuel gas supplied thereto from the liquefied gas vaporization device.

The liquefied gas vaporization device of the invention includes a liquefied gas main pipe that guides liquefied gas; a vaporizer that vaporizes the liquefied gas guided from the liquefied gas main pipe; a gas outlet pipe that guides the gas vaporized in the vaporizer; a gas flowmeter that is provided in the gas outlet pipe; a flow rate adjusting valve that is provided in the liquefied gas main pipe to adjust the flow rate of the liquefied gas guided to the vaporizer; a control unit that controls the flow rate adjusting valve; a liquefied gas secondary pipe that branches and bypasses from the liquefied gas main pipe, is provided so as to rejoin the liquefied gas main pipe, and allows the liquefied gas having a lower flow rate than the liquefied gas main pipe to flow therethrough; a switching valve that switches between the liquefied gas main pipe and the liquefied gas secondary pipe; a liquid flowmeter that measures the flow rate of the liquefied gas flowing through the liquefied gas secondary pipe; and a pressure-reducing means that reduces the pressure of the liquefied gas flowing through the liquefied gas secondary pipe. The control unit controls the flow rate adjusting valve on the basis of a measurement value of the gas flowmeter when the liquefied gas main pipe is selected by the switching valve and controls the flow rate adjusting valve on the basis of a measurement value of the liquid flowmeter when the liquefied gas secondary pipe is selected by the switching valve.

If the liquefied gas main pipe is selected by the switching valve, a high flow rate of liquefied gas flows, and if the liquefied gas secondary pipe is selected, a low flow rate of liquefied gas flows. When the liquefied gas main pipe is selected and a high flow rate of liquefied gas flows, the flow rate adjusting valve is controlled on the basis of the measurement value of the gas flowmeter provided in the gas outlet pipe on the downstream side of the vaporizer. As a result, a desired flow rate of gas can be precisely supplied.

On the other hand, when the liquefied gas secondary pipe is selected and a low flow rate of liquefied gas flows, the flow rate adjusting valve is controlled on the basis of the measurement value of the liquid flowmeter that measures the flow rate of the liquefied gas flowing through the liquefied gas secondary pipe. That is, the measurement value of the gas flowmeter is not used in the case of the low flow rate. This is because the gas flowmeter cannot guarantee measurement precision in the low flow rate since this gas flowmeter is used when a high flow rate of liquefied gas flows. Thus, the flow rate of the liquefied gas flowing through the liquefied gas secondary pipe is precisely measured in the liquid flowmeter. Moreover, in the case of the low flow rate, the pressure of the liquefied gas flowing through the liquefied gas secondary pipe is reduced by the pressure-reducing means. Thus, the opening degree range of the flow rate adjusting valve can be increased compared to a case where pressure is not reduced. As a result, both in the case of the high flow rate and in the case of the low flow rate, the flow rate can be measured with high precision, and the flow rate adjusting valve can be controlled in the opening degree range with excellent controllability.

Moreover, the liquefied gas vaporization device of the invention may include a temperature regulator that is provided in the gas outlet pipe to spray the liquefied gas to regulate gas temperature; a temperature regulating pipe that guides a portion of the liquefied gas from the liquefied gas main pipe at a downstream position of the liquefied gas secondary pipe to spray the liquefied gas to the temperature regulator; a temperature regulating valve that is provided in the temperature regulating pipe; and a temperature sensor that measures the temperature of the gas guided from the temperature regulator. The control unit controls the temperature regulating valve on the basis of a measurement value of the temperature sensor.

As for the temperature regulating valve, similar to the above-described flow rate adjusting valve, the liquefied gas whose pressure has been reduced by the pressure-reducing means is guided in the case of low flow rate. Thus, both in the case of the high flow rate and in the case of the low flow rate, the temperature regulating valve can be controlled in the opening degree range with excellent controllability.

Moreover, in the liquefied gas vaporization device of the invention, a gas-liquid separator may be provided in the liquefied gas main pipe at a downstream position of the liquefied gas secondary pipe and at an upstream position of the flow rate adjusting valve.

There is a concern that the liquefied gas whose pressure has been reduced by passing through the pressure-reducing means of the liquefied gas secondary pipe may be turned into a gas-liquid two-phase flow including flash gas. If the liquefied gas is turned into the gas-liquid two-phase flow, the gaseous phase portion will hinder a liquid phase flow in the flow rate adjusting valve. Thus, in the invention, only a liquid-phase flow is guided to the flow rate adjusting valve by providing the gas-liquid separator on the upstream side of the flow rate adjusting valve.

Moreover, the liquefied gas vaporization device of the invention may include a gas bleeding pipe that guides the gas separated in the gas-liquid separator to the gas outlet pipe; and a gas flow rate adjusting valve that is provided in the gas bleeding pipe. The control unit controls the gas flow rate adjusting valve on the basis of the measurement value of the temperature sensor.

After the flow rate of the gas separated in the gas-liquid separator is adjusted by the gas flow rate adjusting valve, the gas is guided to the gas outlet pipe. As a result, the temperature of the gas flowing through the gas outlet pipe can be regulated.

Additionally, the control method for a liquefied gas vaporization device of the invention is a control method for a liquefied gas vaporization device including a liquefied gas main pipe that guides liquefied gas; a vaporizer that vaporizes the liquefied gas guided from the liquefied gas main pipe; a gas outlet pipe that guides the gas vaporized in the vaporizer; a gas flowmeter that is provided in the gas outlet pipe; a flow rate adjusting valve that is provided in the liquefied gas main pipe to adjust the flow rate of the liquefied gas guided to the vaporizer; a control unit that controls the flow rate adjusting valve; a liquefied gas secondary pipe that branches and bypasses from the liquefied gas main pipe, is provided so as to rejoin the liquefied gas main pipe, and allows the liquefied gas having a lower flow rate than the liquefied gas main pipe to flow therethrough; a switching valve that switches between the liquefied gas main pipe and the liquefied gas secondary pipe; a liquid flowmeter that measures the flow rate of the liquefied gas flowing through the liquefied gas secondary pipe; and a pressure-reducing means that reduces the pressure of the liquefied gas flowing through the liquefied gas secondary pipe. The flow rate adjusting valve is controlled by the control unit on the basis of a measurement value of the gas flowmeter when the liquefied gas main pipe is selected by the switching valve and the flow rate adjusting valve is controlled by the control unit on the basis of a measurement value of the liquid flowmeter when the liquefied gas secondary pipe is selected by the switching valve.

Additionally, the improvement method for a liquefied gas vaporization device of the invention is an improvement method for a liquefied gas vaporization device including a liquefied gas main pipe that guides liquefied gas; a vaporizer that vaporizes the liquefied gas guided from the liquefied gas main pipe; a gas outlet pipe that guides the gas vaporized in the vaporizer; a gas flowmeter that is provided in the gas outlet pipe; a flow rate adjusting valve that is provided in the liquefied gas main pipe to adjust the flow rate of the liquefied gas guided to the vaporizer; and a control unit that controls the flow rate adjusting valve. The method comprises installing a liquefied gas secondary pipe that branches and bypasses from the liquefied gas main pipe, is provided so as to rejoin the liquefied gas main pipe, and allows the liquefied gas having a lower flow rate than the liquefied gas main pipe to flow therethrough; a switching valve that switches between the liquefied gas main pipe and the liquefied gas secondary pipe; a liquid flowmeter that measures the flow rate of the liquefied gas flowing through the liquefied gas secondary pipe; and a pressure-reducing means that reduces the pressure of the liquefied gas flowing through the liquefied gas secondary pipe, and changing a control method for the control unit so as to control the flow rate adjusting valve on the basis of a measurement value of the gas flowmeter when the liquefied gas main pipe is selected by the switching valve and control the flow rate adjusting valve on the basis of a measurement value of the liquid flowmeter when the liquefied gas secondary pipe is selected by the switching valve.

Simply by additionally providing the liquefied gas secondary pipe, the liquid flowmeter, and the pressure-reducing valve and changing the control method for the control unit, liquefied gas vaporization devices for high flow rates can also be made to cope with a low flow rate, and can be realized by extremely simple construction. Advantageous Effects of Invention

When the liquefied gas secondary pipe is selected and a low flow rate of liquefied gas flows, the flow rate adjusting valve is controlled on the basis of the measurement value of the liquid flowmeter that measures the flow rate of the liquefied gas flowing through the liquefied gas secondary pipe, and the control is made on the basis of the measurement value of the liquid flowmeter with more excellent precision than the gas flowmeter. Thus, the flow rate can be adjusted with high precision.

Additionally, in the case of the low flow rate, the pressure of the liquefied gas flowing through the liquefied gas secondary pipe is reduced by the pressure-reducing means. Thus, the opening degree range of the flow rate adjusting valve can be increased compared to a case where pressure is not reduced. As a result, both in the case of the high flow rate and in the case of the low flow rate, the flow rate adjusting valve can be controlled in the opening degree range with excellent controllability. Brief Description of Drawings

Fig.1 is a schematic configuration diagram showing a liquefied gas vaporization device related to a first embodiment of the invention.
Fig.2 is a schematic configuration diagram showing a liquefied gas vaporization device related to a second embodiment of the invention.
Fig.3 is a longitudinal sectional view showing a gas-liquid separator of Fig. 2.
Fig.4 is a longitudinal sectional view showing a modification example of the gas-liquid separator of Fig. 3.
Fig.5 is a schematic configuration diagram showing a liquefied gas vaporization device as a reference example. Description of Embodiments

Hereinafter, embodiments related to the invention will be described with reference to the drawings.

### [First Embodiment]

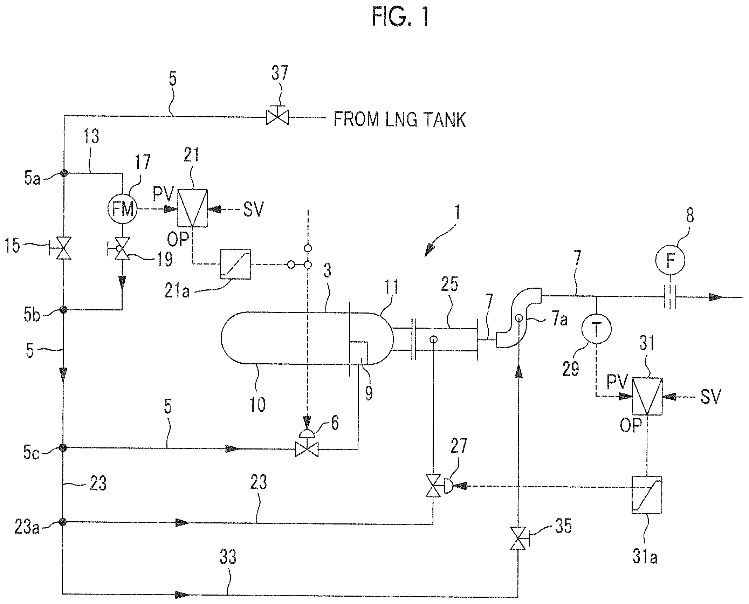

An LNG (liquefied natural gas) vaporizer device (hereinafter "a vaporizer device") 1 related to a first embodiment of a liquefied gas vaporization device that is the invention is shown in Fig. 1. The vaporizer device 1 is installed in an LNG carrier including an LNG storage tank (cargo tank).

In the LNG carrier, natural gas with a high flow rate demanded as gas-replacing gas of the LNG storage tank and natural gas with a low flow rate demanded as fuel for a boiler, a gas firing diesel engine, or the like are required. The vaporizer device 1 of the present embodiment vaporizes LNG to allow the gases with a high flow rate and a low flow rate to be supplied.

As shown in Fig. 1, the vaporizer device 1 includes a vaporizer body (vaporizer) 3 that vaporizes LNG, a main pipe (liquefied gas main pipe) 5 that supplies the LNG to the vaporizer body 3, and a gas outlet pipe 7 that sends the gas (natural gas) vaporized in the vaporizer body 3 to the downstream side.

The vaporizer body 3 is a shell and tube type heat exchanger, and includes an inlet header 9 that receives the LNG guided from the main pipe 5, a heat exchange unit 10 that vaporizes the LNG guided from the inlet header 9, and an outlet header 11 from which the gas (natural gas) vaporized by the heat exchange unit 10 is guided. A large number of tubes (heat transfer tubes) that allow LNG to flow therethrough are provided within the heat exchange unit 10, and the LNG flowing through the tubes is heated from outside the tubes by the steam supplied into the heat exchange unit 10 from the outside.

The main pipe 5 supplies the LNG guided from the LNG storage tank (not shown) to the vaporizer body 3. The diameter of the main pipe 5 is, for example, 40A (nominal diameter), and allows LNG to flow up to about 70 kg/h.

The main pipe 5 is provided with a flow rate adjusting valve 6 that adjusts the flow rate of LNG to be supplied to the vaporizer body 3. The opening degree of the flow rate adjusting valve 6 is controlled on the basis of a measurement value of a gas flowmeter 8 or a liquid flowmeter 17 to be described below. A secondary pipe (liquefied gas secondary pipe) 13 is provided in the main pipe 5 at an upstream position of the flow rate adjusting valve 6 so as to bypass the main pipe 5. The diameter of the secondary pipe 13 is 25A (nominal diameter), and allows LNG to flow at a flow rate equivalent to a fraction of the flow rate of the main pipe 5.

A switching valve 15 is provided between a branch position 5a of the main pipe 5 that branches to the secondary pipe 13 and a joining position 5b of the main pipe 5 where the secondary pipe 13 joins. LNG mainly passes through the main pipe 5 at a high flow rate by fully opening the switching valve 15, and LNG passes through the secondary pipe 13 at a low flow rate by closing the switching valve 15. The operation of the switching valve 15 may be performed by remote control, or may be manually performed.

A liquid flowmeter 17 and a pressure-reducing valve (pressure-reducing means) 19 are provided in order from the upstream side in the secondary pipe 13. In addition, instead of the pressure-reducing valve 19, an orifice may be provided as a fixed type pressure-reducing means. As the liquid flowmeter 17, for example, a Coriolis-type flowmeter is used so as to directly measure a liquid flow rate. A measurement value PV of the liquid flowmeter 17 is sent to a liquid flow rate controller 21. The liquid flow rate controller 21 transmits an opening degree command OP based on a predetermined function 21a to the flow rate adjusting valve 6 so that the measurement flow rate PV obtained in the liquid flowmeter 17 reaches a predetermined setting value SP. In addition, the control of the flow rate adjusting valve 6 by the liquid flow rate controller 21 is performed only when the secondary pipe 13 is selected by the switching valve 15 and is not performed when the secondary pipe 13 is not selected by the switching valve 15.

A temperature regulating pipe 23 that branches from a branch position 5c of the main pipe 5 is provided further toward the downstream side than the joining position 5b where the secondary pipe 13 joins, and on the upstream side of the flow rate adjusting valve 6. The diameter of the temperature regulating pipe 23 is, for example, 40A (nominal diameter) that is the same diameter as the main pipe 5. A downstream end of the temperature regulating pipe 23 is connected to a desuperheater (temperature regulator) 25 provided on an outlet side of the vaporizer body 3. By spraying the LNG guided from the temperature regulating pipe 23 into the desuperheater 25, the superheated gas guided from the vaporizer body 3 is cooled so as to regulate temperature. The flow rate of the LNG to be sprayed into the desuperheater 25 is adjusted by a temperature regulating valve 27 provided in the temperature regulating pipe 23. The temperature regulating valve 27 is controlled by a temperature regulating controller 31, on the basis of a measurement value PV of a temperature sensor 29 provided in the gas outlet pipe 7. The temperature regulating controller 31 transmits an opening degree command OP based on a predetermined function 31a to the temperature regulating valve 27 so that a measured temperature PV obtained in the temperature sensor 29 reaches a predetermined setting value SP. In addition, the control of the temperature regulating valve 27 by the temperature regulating controller 31 is performed both when the secondary pipe 13 is selected by the switching valve 15 and when the main pipe 5 is selected by the switching valve 15.

A gas bleeding pipe 33 branches from a branch point 23a of the temperature regulating pipe 23 at an upstream position of the temperature regulating valve 27. A gas component in the LNG flowing through the main pipe 5 is separated by the gas bleeding pipe 33. The diameter of the gas bleeding pipe 33 is made smaller than the diameters of the main pipe 5 and the temperature regulating pipe 23, and is, for example, 25A (nominal diameter). A downstream end of the gas bleeding pipe 33 is connected to a merging portion 7a of the gas outlet pipe 7. The merging portion 7a is provided on the downstream side of the desuperheater 25 and on the upstream side of the temperature sensor 29 and the gas flowmeter 8. A gas bleeding valve (gas flow rate adjusting valve) 35 that adjusts a gas flow rate is provided in the gas bleeding pipe 33, and the temperature of the gas flowing through the gas outlet pipe 7 can be adjusted by adjusting the flow rate of the gas bleeding valve 35.

The gas outlet pipe 7 is connected to an outlet of the vaporizer body 3, and the desuperheater 25, the merging portion 7a, the temperature sensor 29, and the gas flowmeter 8 are provided in order from the upstream side. The diameter of the gas outlet pipe 7 is, for example, 40A (nominal diameter), and allows the gas (natural gas) to flow up to about 70 kg/h.

The gas flowmeter 8 measures the volume flow rate of gas, and, for example, an orifice meter is used. In a control unit (not shown), the opening degree of the flow rate adjusting valve 6 is controlled so that the gas volume flow rate obtained in the gas flowmeter 8 reaches a predetermined setting value after being converted into a mass flow rate. The control of the flow rate adjusting valve 6 based on the measurement value of the gas flowmeter 8 is performed only when the main pipe 5 is selected by the switching valve 15 and is not performed when the main pipe 5 is not selected by the switching valve 15. In addition, various flowmeters are available as the gas flowmeter 8, and, for example, a venturi tube flowmeter may be used instead of the orifice meter.

The vaporizer device 1 having the above configuration is used as follows.

### <In Case of High Flow Rate>

When a high flow rate of LNG is vaporized as in a case where the gas replacement within the LNG storage tank is performed, the switching valve 15 is fully opened, and the main pipe 5 is selected. Then, the flow rate adjusting valve 6 is controlled on the basis of the gas flowmeter 8.

The LNG guided from the LNG storage tank passes through an operating valve 37, flows through the main pipe 5, and passes through the fully opened switching valve 15 while hardly flowing to the secondary pipe 13 to which a flow path resistor is attached, due to the pressure-reducing valve 19. The LNG that has passed through the switching valve 15 flows into the vaporizer body 3 after being adjusted to a predetermined flow rate in the flow rate adjusting valve 6. The opening degree of the flow rate adjusting valve 6 is controlled by the control unit (not shown) on the basis of the measurement value of the gas flowmeter 8 so that a required gas flow rate (setting value) is satisfied when the gas replacement of the LNG storage tank is performed. An opening degree range (for example, 70% to 80%) with excellent controllability is used as an opening degree range to be used in the flow rate adjusting valve 6 at this time. That is, the flow rate adjusting valve 6 is selected according to the conditions in the case of a high flow rate.

The LNG that has flowed into the vaporizer body 3 first flows into the inlet header 9, is then distributed to the large number of heat transfer tubes (not shown), and is heated and vaporized by the steam supplied from the outside in the heat exchange unit 10. The gas (natural gas) vaporized in the heat exchange unit 10 is brought to a superheated state, is guided to the outlet header 11, and is passed to the desuperheater 25.

In the desuperheater 25, the LNG branched from the branch position 5c of the main pipe 5 and guided via the temperature regulating pipe 23 is sprayed, and the superheated gas is cooled to a desired temperature. In this case, the amount of the LNG to be sprayed is adjusted by the temperature regulating valve 27. The temperature regulating valve 27 is controlled by the temperature regulating controller 31 on the basis of a measurement value of the temperature sensor 29 provided in the gas outlet pipe 7 so as to obtain a predetermined target temperature.

The gas (natural gas) cooled to a predetermined temperature in the desuperheater 25 is guided to the merging portion 7a through the gas outlet pipe 7. In the merging portion 7a, the gas whose flow rate has been adjusted in the gas bleeding valve 35 is joined via the gas bleeding pipe 33 branched from the branch position 23a of the temperature regulating pipe 23. The temperature of the gas guided via the gas outlet pipe 7 is finally adjusted by the gas guided from the gas bleeding valve 33.

Thereafter, the gas guided from the gas outlet pipe 7 is supplied to a gas space above the liquid surface of the LNG storage tank via a predetermined pipe line (not shown).

### <In Case of Low Flow Rate>

When a low flow rate of LNG is vaporized as in a case where fuel gas is supplied to a boiler or a gas firing diesel engine, the switching valve 15 is fully closed, and the secondary pipe 13 is selected. Then, the flow rate adjusting valve 6 is controlled on the basis of the liquid flowmeter 17.

The LNG guided from the LNG storage tank passes through the operating valve 37, flows through the main pipe 5, and flows into the secondary pipe 13 branched from the main pipe 5 at the branch position 5a without flowing to the main pipe 5 in which the switching valve 15 is fully closed. In the secondary pipe 13, the liquid flow rate of the LNG is measured in the liquid flowmeter 17, the pressure of the LNG is reduced to 100 kPa or lower in the pressure-reducing valve 19, and the LNG flows into the main pipe 5 at the joining position 5b. The LNG whose pressure has been reduced in the pressure-reducing valve 19 flows into the vaporizer body 3 after being adjusted to a predetermined flow rate in the flow rate adjusting valve 6. The opening degree of the flow rate adjusting valve 6 is controlled by the liquid flow rate controller 21 on the basis of a measurement value of the liquid flowmeter 17 so that a gas flow rate (setting value) required by a boiler or a gas firing diesel engine is satisfied. Since pressure is reduced in the pressure-reducing valve 19, an opening degree range (for example, 70% to 80%) with excellent controllability similar to the case of the high flow rate is used as an opening degree range to be used in the flow rate adjusting valve 6 at this time. That is, since upstream pressure (primary pressure) is reduced even in a case where the flow rate adjusting valve 6 is selected according to the conditions in the case of the high flow rate, an opening degree range with excellent controllability is used even in the low flow rate. Since the operation after LNG has been guided into the vaporizer body 3 is the same as that in the case of the high flow rate, the description thereof is omitted.

The gas (natural gas) obtained in this way is guided to a boiler or a gas firing diesel engine via a predetermined pipe line (not shown) from the gas outlet pipe 7.

From the above, according to the vaporizer device 1 of the present embodiment, the following effects are exhibited.

When the main pipe 5 is selected and a high flow rate of LNG flows, the flow rate adjusting valve 6 is controlled on the basis of the measurement value of the gas flowmeter 8 provided in the gas outlet pipe 7 on the downstream side of the vaporizer body 3. In this way, since the gas flowmeter 8 having excellent measurement precision in a flow rate range where the flow rate is made high, and the flow rate adjusting valve 6 that can adjust the flow rate in an opening degree range with excellent controllability in this flow rate range are used, a desired flow rate of gas can be precisely supplied.

On the other hand, when the secondary pipe 13 is selected by the switching valve 15 and a low flow rate of LNG flows, the flow rate adjusting valve 6 is controlled on the basis of the measurement value of the liquid flowmeter 17 that measures the flow rate of the LNG flowing through the secondary pipe 13. That is, in the case of the low flow rate, the measurement value of the gas flowmeter 8 having proper precision in the flow rate range in the case of the high flow rate is not used. This is because the gas flowmeter 8 cannot guarantee measurement precision in the low flow rate since this gas flowmeter is used when a high flow rate of LNG flows. Thus, in the present embodiment, the flow rate of the LNG flowing through the secondary pipe 13 is precisely measured in the liquid flowmeter 17. Moreover, in the case of the low flow rate, the pressure of the LNG flowing through the secondary pipe 13 is reduced by the pressure-reducing valve 19. Thus, the opening degree range of the flow rate adjusting valve 6 can be increased compared to a case where pressure is not reduced. As a result, both in the case of the high flow rate and in the case of the low flow rate, the flow rate can be measured with high precision, and the flow rate adjusting valve 6 can be controlled in the opening degree range with excellent controllability.

As for the temperature regulating valve 27, similar to the flow rate adjusting valve 6, the LNG whose pressure has been reduced by the pressure-reducing valve 19 is guided in the case of low flow rate. Thus, both in the case of the high flow rate and in the case of the low flow rate, the temperature regulating valve 27 can be controlled in the opening degree range with excellent controllability.

### [Second Embodiment]

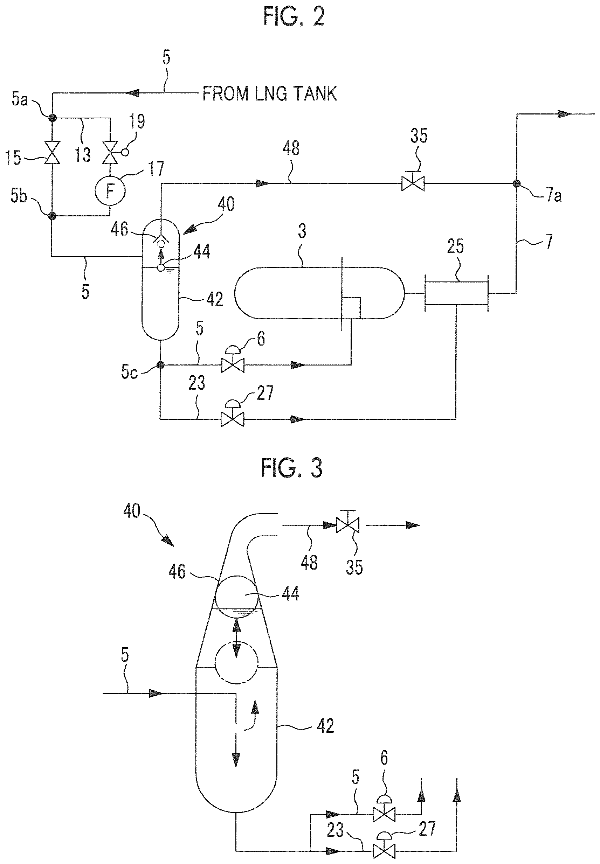

Next, a second embodiment of the invention will be described with reference to Figs. 2 to 4. The present embodiment is different from the first embodiment in that a gas-liquid separator 40 is included in addition to the first embodiment. Other common components will be designated by the same reference numerals and the description thereof will be omitted.

As shown in Fig. 2, the gas-liquid separator 40 is provided on the downstream side of the merging position 5b where the secondary pipe 13 joins the main pipe 5, and on the upstream side (that is, on the upstream side of the branch position 5c) of the flow rate adjusting valve 6 and the temperature regulating valve 27.

As shown in Fig. 3, the gas-liquid separator 40 includes a container 42 that temporarily stores LNG, and a sealing ball 44 that is provided within the container 42 and has buoyancy with respect to the LNG. While the LNG is temporarily stored within the container 42 of the gas-liquid separator 40, a gas component in the LNG having a gas-liquid two-phase flow is separated. The sealing ball 44 floats on a liquid surface of the LNG, and the rise of the liquid surface is suppressed by blocking an outlet opening 46 having an area smaller than the sealing ball 44 as the liquid surface rises. A gas bleeding pipe 48 is connected to an upper portion of the gas-liquid separator 40. Similar to the gas bleeding pipe 33 shown in Fig. 1, the gas bleeding pipe 48 includes the gas bleeding valve 35 and is connected to the gas outlet pipe 7 in the merging portion 7a.

The gas-liquid separator 40 having the above configuration is used as follows.

If the secondary pipe 13 is selected in the case of a low flow rate, the pressure of LNG is reduced by the pressure-reducing valve 19. In this case, the LNG may be flashed and turned into a gas-liquid two-phase flow. The LNG turned into the gas-liquid two-phase flow in this way flows into the gas-liquid separator 40. While the LNG is temporarily stored within the container 42 of the gas-liquid separator 40, a gas component is separated. The separated gas component (natural gas) is guided to the gas outlet pipe 7 via the gas bleeding pipe 48 connected to an upper portion of the container 42. In this case, the present embodiment is the same as the first embodiment in that the flow rate adjustment is performed by the gas bleeding valve 35 and the temperature of the gas flowing through the gas outlet pipe 7 is regulated.

If the liquid surface within the container 42 rises, the sealing ball 44 rises with the liquid surface, and blocks the outlet opening 46. This can prevent the LNG from flowing into the gas bleeding pipe 48.

In this way, according to the present embodiment, even if the LNG whose pressure has been reduced by passing through the pressure-reducing valve 19 of the secondary pipe 13 is turned into the gas-liquid two-phase flow including flash gas, a gas component can be removed by the gas-liquid separator 40. Accordingly, it is possible to avoid a situation where the LNG turned into the gas-liquid two-phase flow flows into the flow rate adjusting valve 6 or the temperature regulating valve 27 and hinders liquid-phase flow in the flow rate adjusting valve 6 and the temperature regulating valve 27.

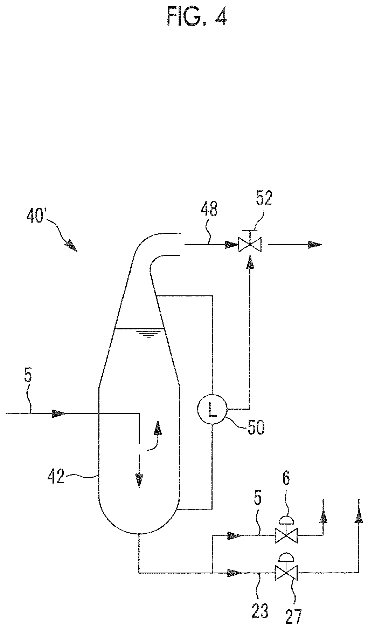

In addition, a gas-liquid separator 40' shown in Fig. 4 may be used instead of the gas-liquid separator 40 shown in Fig. 3. Specifically, a liquid level sensor 50 that detects a liquid surface position may be provided, and a liquid level control valve 52 may be controlled on the basis of a detection value of the liquid level sensor 50. According to such a configuration, the sealing ball 44 shown in Figs. 2 and 3 can be omitted.

Additionally, in the present embodiment, as shown in Fig. 2, the positional relationship between the liquid flowmeter 17 and the pressure-reducing valve 19 that are provided in the secondary pipe 13 is reversed in comparison to the first embodiment shown in Fig. 1, but such a positional relationship may be adopted.

Additionally, the gas-liquid separator 40 or 40' of the present embodiment may be applied to the first embodiment. Specifically, the gas-liquid separator 40 or 40' is provided at a branch position 23a shown in Fig. 1.

In the above-described embodiments, a case where LNG is used as the liquefied gas has been described as an example. However, the invention may not be limited to this, and other liquefied gases may be used. For example, LPG (liquefied propane gas) may be used.

Additionally, although the vaporizer device provided in the LNG carrier has been described in the above respective embodiments, the vaporizer device may be applied to vessels, such as an LPG carrier, which include a tank storing liquefied gas, without being limited to the LNG carrier as the vessel.

Additionally, the vaporizer device of the invention can also be used for a new vessel, and is effective particularly when a system that supplies a low flow rate of gas for fuel gas supply or the like is additionally provided to vaporizer devices for high flow rates installed in the existing vessels. In this case, the vaporizer device can be realized by extremely simple construction simply by additionally providing the secondary pipe 13, the liquid flowmeter 17, and the pressure-reducing valve 19 and changing control software for the flow rate adjusting valve 6.

### Reference Signs List

1: LNG VAPORIZER DEVICE (LIQUEFIED GAS VAPORIZATION DEVICE)
3: VAPORIZER BODY (VAPORIZER)
5: MAIN PIPE (LIQUEFIED GAS MAIN PIPE)
6: FLOW RATE ADJUSTING VALVE
7: GAS OUTLET PIPE
7a: MERGING PORTION
8: GAS FLOWMETER
9: INLET HEADER
10: HEAT EXCHANGE UNIT
11: OUTLET HEADER
13: SECONDARY PIPE (LIQUEFIED GAS SECONDARY PIPE)
15: SWITCHING VALVE
17: LIQUID FLOWMETER
19: PRESSURE-REDUCING VALVE (PRESSURE-REDUCING MEANS)
21: LIQUID FLOW RATE CONTROLLER
21a: FUNCTION
23: TEMPERATURE REGULATING PIPE
25: DESUPERHEATER (TEMPERATURE REGULATOR)
27: TEMPERATURE REGULATING VALVE
29: TEMPERATURE SENSOR
31: TEMPERATURE REGULATING CONTROLLER
31a: FUNCTION
33: GAS BLEEDING PIPE
35: GAS BLEEDING VALVE (GAS FLOW RATE ADJUSTING VALVE)
37: OPERATING VALVE
40, 40': GAS-LIQUID SEPARATOR
42: CONTAINER
44: SEALING BALL
46: OUTLET OPENING
48: GAS BLEEDING PIPE
50: LIQUID LEVEL SENSOR
52: LIQUID LEVEL CONTROL VALVE

## Claims

1. A liquefied gas vaporization device (1) comprising:
a liquefied gas main pipe (5) for guiding liquefied gas;
a vaporizer (3) for vaporizing the liquefied gas guided from the liquefied gas main pipe (5);
a gas outlet pipe (7) for guiding the gas vaporized in the vaporizer (3);
a gas flowmeter (8) that is provided in the gas outlet pipe (7);
a flow rate adjusting valve (6) that is provided in the liquefied gas main pipe (5) for adjusting the flow rate of the liquefied gas guided to the vaporizer (3);
a control unit for controlling the flow rate adjusting valve (6);
a liquefied gas secondary pipe (13) that branches and bypasses from the liquefied gas main pipe (5), that is provided so as to rejoin the liquefied gas main pipe (5), and that allows the liquefied gas having a lower flow rate than the liquefied gas main pipe (5) to flow therethrough;
a switching valve (15) for switching between the liquefied gas main pipe (5) and the liquefied gas secondary pipe (13);
a liquid flowmeter (17) for measuring the flow rate of the liquefied gas flowing through the liquefied gas secondary pipe (13); and
a pressure-reducing means (19) for reducing,the pressure of the liquefied gas flowing through the liquefied gas secondary pipe (13),
wherein the control unit is arranged to control the flow rate adjusting valve (6) on the basis of a measurement value of the gas flowmeter (8) when the liquefied gas main pipe (5) is selected by the switching valve (15) and to control the flow rate adjusting valve (6) on the basis of a measurement value of the liquid flowmeter (17) when the liquefied gas secondary pipe (13) is selected by the switching valve (15).

2. The liquefied gas vaporization device (1) according to Claim 1, further comprising:
a temperature regulator (25) that is provided in the gas outlet pipe (7) and is arranged to spray the liquefied gas to regulate a gas temperature;
a temperature regulating pipe (23) for guiding a portion of the liquefied gas from the liquefied gas main pipe (5) at a downstream position of the liquefied gas secondary pipe (13) to the temperature regulator (25) to spray the liquefied gas;
a temperature regulating valve (27) that is provided in the temperature regulating pipe (23); and
a temperature sensor (29) for measuring the temperature of the gas guided from the temperature regulator (25),
wherein the control unit is arranged to control the temperature regulating valve (27) on the basis of a measurement value of the temperature sensor (29).

3. The liquefied gas vaporization device (1) according to Claim 1 or 2,
wherein a gas-liquid separator (40;40') is provided in the liquefied gas main pipe (5) at a downstream position of the liquefied gas secondary pipe (13) and at an upstream position of the flow rate adjusting valve (6).

4. The liquefied gas vaporization device (1) according to Claim 3, further comprising:
a gas bleeding pipe (48) for guiding the gas separated in the gas-liquid separator (40;40') to the gas outlet pipe (7); and
a gas flow rate adjusting valve (35) that is provided in the gas bleeding pipe (48),
wherein the control unit is arranged to control the gas flow rate adjusting valve (35) on the basis of the measurement value of the temperature sensor (29).

5. A vessel comprising:
a liquefied gas vaporization device (1) according to any one of claims 1 to 4; and
a main engine having the liquefied fuel gas supplied thereto from the liquefied gas vaporization device (1).

6. A control method for a liquefied gas vaporization device (1) that includes:
a liquefied gas main pipe (5) that guides liquefied gas;
a vaporizer (3) that vaporizes the liquefied gas guided from the liquefied gas main pipe (5);
a gas outlet pipe (7) that guides the gas vaporized in the vaporizer (3);
a gas flowmeter (8) that is provided in the gas outlet pipe (7);
a flow rate adjusting valve (6) that is provided in the liquefied gas main pipe (5) to adjust the flow rate of the liquefied gas guided to the vaporizer (3);
a control unit that controls the flow rate adjusting valve (6);
a liquefied gas secondary pipe (13) that branches and bypasses from the liquefied gas main pipe (5), that is provided so as to rejoin the liquefied gas main pipe (5), and that allows the liquefied gas having a lower flow rate than the liquefied gas main pipe (5) to flow therethrough;
a switching valve (15) that switches between the liquefied gas main pipe (5) and the liquefied gas secondary pipe (13);
a liquid flowmeter (17) that measures the flow rate of the liquefied gas flowing through the liquefied gas secondary pipe (13); and
a pressure-reducing means (19) that reduces the pressure of the liquefied gas flowing through the liquefied gas secondary pipe (13),
wherein the flow rate adjusting valve (6) is controlled by the control unit on the basis of a measurement value of the gas flowmeter (8) when the liquefied gas main pipe (5) is selected by the switching valve (15) and the flow rate adjusting valve (6) is controlled by the control unit on the basis of a measurement value of the liquid flowmeter (17) when the liquefied gas secondary pipe (13) is selected by the switching valve (15).

7. An improvement method for a liquefied gas vaporization device (1) that includes:
a liquefied gas main pipe (5) for guiding liquefied gas;
a vaporizer (3) for vaporizing the liquefied gas guided from the liquefied gas main pipe (5);
a gas outlet pipe (7) for guiding the gas vaporized in the vaporizer (3);
a gas flowmeter (8) that is provided in the gas outlet pipe (7);
a flow rate adjusting valve (6) that is provided in the liquefied gas main pipe (5) for adjusting the flow rate of the liquefied gas guided to the vaporizer (3); and
a control unit for controlling the flow rate adjusting valve (6),
the method comprising:
installing a liquefied gas secondary pipe (13) that branches and bypasses from the liquefied gas main pipe (5), that is provided so as to rejoin the liquefied gas main pipe (5), and that allows the liquefied gas having a lower flow rate than the liquefied gas main pipe (5) to flow therethrough;
installing a switching valve (15) for switching between the liquefied gas main pipe (5) and the liquefied gas secondary pipe (13);
installing a liquid flowmeter (17) for measuring the flow rate of the liquefied gas flowing through the liquefied gas secondary pipe (13); and
installing a pressure-reducing means (19) for reducing the pressure of the liquefied gas flowing through the liquefied gas secondary pipe (13); and
changing a control method for the control unit so as to be arranged to control the flow rate adjusting valve (6) on the basis of a measurement value of the gas flowmeter (8) when the liquefied gas main pipe (5) is selected by the switching valve (15) and to control the flow rate adjusting valve (6) on the basis of a measurement value of the liquid flowmeter (17) when the liquefied gas secondary pipe (13) is selected by the switching valve (15).

## Patentansprüche

1. Eine Flüssiggas-Verdampfungsvorrichtung (1) mit:
einem Flüssiggas-Hauptrohr (5) zum Leiten von Flüssiggas,
einem Verdampfer (3) zum Verdampfen des von dem Flüssiggas-Hauptrohr (5) geleiteten Flüssiggases,
einem Gasauslassrohr (7) zum Leiten des in dem Verdampfer (3) verdampften Gases,
einem Gas-Strömungsmesser (8), der in dem Gasauslassrohr (7) vorgesehen ist,
einem Strömungsrateneinstellventil (6), das in dem Flüssiggas-Hauptrohr (5) zum Einstellen der Strömungsrate des zu dem Verdampfer (3) geleiteten Flüssiggases vorgesehen ist,
einer Steuereinheit zum Steuern des Strömungsrateneinstellventils (6),
einem Flüssiggas-Sekundärrohr (13), das von dem Flüssiggas-Hauptrohr abzweigt und dieses umgeht, das so vorgesehen ist, das es sich mit dem Flüssiggas-Hauptrohr (5) wieder vereinigt, und das das Flüssiggas mit einer niedrigeren Strömungsrate als das Flüssiggas-Hauptrohr (5) durch dieses hindurch strömen lässt,
einem Schaltventil (15) zum Umschalten zwischen dem Flüssiggas-Hauptrohr (5) und dem Flüssiggas-Sekundärrohr (13),
einem Flüssigkeits-Strömungsmesser (17) zum Messen der Strömungsrate des durch das Flüssiggas-Sekundärrohr (13) strömenden Flüssiggases, und
einem Druckminderungsmittel (19) zum Verringern des Drucks des durch das Flüssiggas-Sekundärrohr (13) strömenden Flüssiggases,
wobei die Steuereinheit angeordnet ist, um das Strömungsrateneinstellventil (6) auf der Basis eines Messwerts des Gas-Strömungsmesser (8) zu steuern, wenn das Flüssiggas-Hauptrohr (5) durch das Umschaltventil (15) ausgewählt ist, und um das Strömungsrateneinstellventil (6) auf der Basis eines Messwerts des Flüssigkeits-Strömungsmessers (17) zu steuern, wenn das Flüssiggas-Sekundärrohr (13) durch das Umschaltventil (15) ausgewählt ist.

2. Die Fiüssiggas-Verdampfungsvorrichtung (1) gemäß Anspruch 1, ferner mit:
einem Temperaturregulator (25), der in dem GasAuslassrohr (7) vorgesehen ist und der angeordnet ist, um das Flüssiggas zum Regulieren einer Gastemperatur zu versprühen,
einem Temperaturregulierrohr (23) zum Leiten eines Teils des Flüssiggases von dem Flüssiggas-Hauptrohr (5) an einer stromabwärtigen Position des Flüssiggas-Sekundärrohrs (13) zu dem Temperaturregulator (25) zum Versprühen des Flüssiggases,
einem Temperaturregulierventil (27), das in dem Temperaturregulierrohr (23) vorgesehen ist, und
einem Temperatursensor (29) zum Messen der Temperatur des von dem Temperaturregulator (25) geleiteten Gases,
wobei die Steuereinheit angeordnet ist, um das Temperaturregulierventil (27) auf der Basis eines Messwerts des Temperatursensors (29) zu steuern.

3. Die Flüssiggas-Verdampfungsvorrichtung (1) gemäß Anspruch 1 oder 2,
wobei ein Gas-Flüssigkeits-Separator (40;40') in dem Flüssiggas-Hauptrohr (5) an einer stromabwärtigen Position des Flüssiggas-Sekundärrohrs (13) und einer stromaufwärtigen Position des Strömungsrateneinstellventils (6) vorgesehen ist.

4. Die Flüssiggas-Verdampfungsvorrichtung (1) gemäß Anspruch 3, ferner mit:
einem Gasablassrohr (48) zum Leiten des in dem Gas-Flüssigkeits-Separator (40;40') abgetrennten Gases zu dem Gasauslassrohr (7), und
einem Gas-Strömungsrateneinstellventil (35), das in dem Gasablassrohr (48) vorgesehen ist,
wobei die Steuereinheit angeordnet ist, um das Gas-Strömungsrateneinstellventil (35) auf der Basis des Messwerts des Temperatursensors (29) zu steuern.

5. Ein Seefahrzeug mit:
einer Flüssiggas-Verdampfungsvorrichtung (1) gemäß einem der Ansprüche 1 bis 4, und
einer Hauptantriebsmaschine, der das verflüssigte Brennstoffgas von der Flüssiggas-Verdampfungsvorrichtung (1) zugeführt wird.

6. Ein Steuerverfahren für eine Flüssiggas-Verdampfungsvorrichtung (1) mit:
einem Flüssiggas-Hauptrohr (5), welches Flüssiggas leitet,
einem Verdampfer (3), welcher das von dem Flüssiggas-Hauptrohr (5) geleitete Flüssiggas verdampft,
einem Gasauslassrohr (7), welches das in dem Verdampfer (3) verdampfte Gas leitet,
einem Gas-Strömungsmesser (8), der in dem Gasauslassrohr (7) vorgesehen ist,
einem Strömungsrateneinstellventil (6), das in dem Flüssiggas-Hauptrohr (5) zum Einstellen der Strömungsrate des zu dem Verdampfer (3) geleiteten Flüssiggases vorgesehen ist,
einer Steuereinheit, welche das Strömungsrateneinstellventil (6) steuert,
einem Flüssiggas-Sekundärrohr (13), das von dem Flüssiggas-Hauptrohr abzweigt und dieses umgeht, das so vorgesehen ist, das es sich mit dem Flüssiggas-Hauptrohr (5) wieder vereinigt, und das das Flüssiggas mit einer niedrigeren Strömungsrate als das Flüssiggas-Hauptrohr (5) durch dieses hindurch strömen lässt,
einem Schaltventil (15), welches zwischen dem Flüssiggas-Hauptrohr (5) und dem Flüssiggas-Sekundärrohr (13) umschaltet,
einem Flüssigkeits-Strömungsmesser (17), welches die Strömungsrate des durch das Flüssiggas-Sekundärrohr (13) strömenden Flüssiggases misst, und
einem Druckminderungsmittel (19), welches den Druck des durch das Flüssiggas-Sekundärrohr (13) strömenden Flüssiggases verringert,
wobei das Strömungsrateneinstellventil (6) durch die Steuereinheit auf der Basis eines Messwerts des Gas-Strömungsmessers (8) gesteuert wird, wenn das Flüssiggas-Hauptrohr (5) durch das Umschaltventil (15) ausgewählt ist, und das Strömungsrateneinstellventil (6) durch die Steuereinheit auf der Basis eines Messwerts des Flüssigkeits-Strömungsmessers (17) gesteuert wird, wenn das Flüssiggas-Sekundärrohr (13) durch das Umschaltventil (15) ausgewählt ist.

7. Ein Verbesserungsverfahren für eine Flüssiggas-Verdampfungsvorrichtung (1) mit:
einem Flüssiggas-Hauptrohr (5) zum Leiten von Flüssiggas,
einem Verdampfer (3) zum Verdampfen des von dem Flüssiggas-Hauptrohr (5) geleiteten Flüssiggases,
einem Gasauslassrohr (7) zum Leiten des in dem Verdampfer (3) verdampften Gases,
einem Gas-Strömungsmesser (8), der in dem Gasauslassrohr (7) vorgesehen ist,
einem Strömungsrateneinstellventil (6), das in dem Flüssiggas-Hauptrohr (5) zum Einstellen der Strömungsrate des zu dem Verdampfer (3) geleiteten Flüssiggases vorgesehen ist, und
einer Steuereinheit zum Steuern des Strömungsrateneinstellventils (6),
wobei das Verfahren aufweist:
Installieren eines Flüssiggas-Sekundärrohrs (13), das von dem Flüssiggas-Hauptrohr (5) abzweigt und dieses umgeht, das so vorgesehen ist, dass es sich mit dem Flüssiggas-Hauptrohr (5) wieder vereinigt, und das ein Strömen des Flüssiggases mit einer niedrigeren Strömungsrate als das Flüssiggas-Hauptrohr (5) durch dieses hindurch zulässt,
Installieren eines Umschaltventils (15) zum Umschalten zwischen dem Flüssiggas-Hauptrohr (5) und dem Flüssiggas-Sekundärrohr (13),
Installieren eines Flüssigkeits-Strömungsmessers (17) zum Messen der Strömungsrate des durch das Flüssiggas-Sekundärrohr (13) strömenden Flüssiggases, und
Installieren eines Druckminderungsmittels (19) zum Verringern des Drucks des durch das Flüssiggas-Sekundärrohr (13) strömenden Flüssiggases, und
Ändern eines Steuerverfahrens für die Steuereinheit so, dass diese angeordnet ist, um das Strömungsrateneinstellventil (6) auf der Basis eines Messwerts des Gas-Strömungsmessers (8) zu steuern, wenn das Flüssiggas-Hauptrohr (5) durch das Umschaltventil (15) ausgewählt ist, und dass es das Strömungsrateneinstellventil (6) auf der Basis eines Messwerts des Flüssigkeits-Strömungsmessers (17) steuert, wenn das Flüssiggas-Sekundärrohr (13) durch das Umschaltventil (15) ausgewählt ist.

## Revendications

1. Dispositif (1) de vaporisation de gaz liquéfié comprenant :
un conduit (5) principal pour du gaz liquéfié pour conduire du gaz liquéfié ;
un vaporisateur (3) pour vaporiser le gaz liquéfié provenant du conduit (5) principal pour du gaz liquéfié ;
un conduit (7) de sortie du gaz pour conduire le gaz vaporisé dans le vaporisateur (3) ;
un débitmètre (8) pour du gaz, qui est prévu dans le conduit (7) de sortie du gaz ;
un robinet (6) de réglage de débit, qui est prévu dans le conduit (5) principal pour du gaz liquéfié, afin de régler le débit du gaz liquéfié conduit au vaporisateur (3) ;
une unité de commande pour commander le robinet (6) de réglage du débit ;
un conduit (13) secondaire pour du gaz liquéfié, qui est en bifurcation et en dérivation du conduit (5) principal pour du gaz liquéfié et qui est prévu de manière à rejoindre le conduit (5) principal pour du gaz liquéfié et qui permet de faire passer du gaz liquéfié ayant un débit plus petit que dans le conduit (5) principal pour du gaz liquéfié ;
une vanne (15) de commutation pour commuter entre le conduit (5) principal pour du gaz liquéfié et le conduit (13) secondaire pour du gaz liquéfié ;
un débitmètre (17) pour du liquide pour mesurer le débit du gaz liquéfié passant dans le conduit (13) secondaire pour du gaz liquéfié et
un moyen (19) de réduction de la pression pour réduire la pression du gaz liquéfié passant dans le conduit (13) secondaire pour du gaz liquéfié,
dans lequel l'unité de commande est conçue pour commander le robinet (6) de réglage du débit sur la base d'une valeur de mesure du débitmètre (8) pour du gaz, lorsque le conduit (5) principal pour du gaz liquéfié est choisi par la vanne (15) de commutation, et pour commander la vanne (6) de réglage du débit sur la base d'une valeur de mesure du débitmètre (17) à liquide, lorsque le conduit (13) secondaire pour du gaz liquéfié est choisi par la vanne (15) de commutation.

2. Dispositif (1) de vaporisation de gaz liquéfié suivant la revendication 1, comprenant, en outre :
un régulateur (25) de température, qui est prévu dans le conduit (7) de sortie du gaz et qui est conçu pour pulvériser le gaz liquéfié afin de réguler une température du gaz ;
un conduit (23) de régulation de la température pour conduire une partie du gaz liquéfié du conduit (5) principal pour du gaz liquéfié à une position en aval du conduit (13) secondaire pour du gaz liquéfié au régulateur (25) de la température pour pulvériser le gaz liquéfié ;
une vanne (27) de régulation de la température, qui est prévue dans le conduit (23) de régulation de la température et
une sonde (29) de température pour mesurer la température du gaz conduit à partir du régulateur (25) de la température,
dans lequel l'unité de commande est conçue pour commander la vanne (27) de régulation de la température sur la base d'une valeur de mesure de la sonde (29) de température.

3. Dispositif (1) de vaporisation de gaz liquéfié suivant la revendication 1 ou 2,
dans lequel un séparateur (40; 40') gaz-liquide est prévu dans le conduit (5) principal pour du gaz liquéfié en une position en aval du conduit (13) secondaire pour du gaz liquéfié et en une position en amont du robinet (6) de réglage du débit.

4. Dispositif (1) de vaporisation de gaz liquéfié suivant la revendication 2, comprenant, en outre :
un conduit (48) de purge de gaz pour conduire le gaz séparé dans le séparateur (40; 40') gaz-liquide au conduit (7) de sortie du gaz et
un robinet (35) de réglage du débit de gaz, qui est prévu dans le conduit (48) de purge de gaz,
dans lequel l'unité de commande est conçue pour commander le robinet (35) de réglage du débit de gaz sur la base de la valeur de mesure de la sonde (29) de température.

5. Récipient comprenant :
un dispositif (1) de vaporisation de gaz liquéfié suivant l'une quelconque des revendications 1 à 4 et
un moteur principal, auquel du gaz combustible liquéfié est fourni par le dispositif (1) de vaporisation de gaz liquéfié.

6. Procédé de commande d'un dispositif (1) de vaporisation de gaz liquéfié, qui comprend :
un conduit (5) principal pour du gaz liquéfié, qui conduit du gaz liquéfié ;
un vaporisateur (3), qui vaporise le gaz liquéfié provenant du conduit (5) principal pour du gaz liquéfié ;
un conduit (7) de sortie du gaz, qui conduit le gaz vaporisé dans le vaporisateur (3) ;
un débitmètre (8) pour du gaz, qui est prévu dans le conduit (7) de sortie du gaz ;
un robinet (6) de réglage du débit, qui est prévu dans le conduit (5) principal pour du gaz liquéfié pour régler le débit du gaz liquéfié allant au vaporisateur (3) ;
une unité de commande, qui commande le robinet (6) de réglage du débit ;
un conduit (13) secondaire pour du gaz liquéfié, qui est en bifurcation et en dérivation du conduit (5) principal pour du gaz liquéfié, qui est prévu de manière à rejoindre le conduit (5) principal pour du gaz liquéfié et qui permet de faire passer du gaz liquéfié à un débit plus petit que dans le conduit (5) principal pour du gaz liquéfié ;
une vanne (15) de commutation, qui commute entre le conduit (5) principal pour du gaz liquéfié et le conduit (13) secondaire pour du gaz liquéfié ;
un débitmètre (17) pour du liquide, qui mesure le débit du gaz liquéfié passant dans le conduit (13) secondaire pour du gaz liquéfié et
un moyen (19) de réduction de la pression, qui réduit la pression du gaz liquéfié passant dans le conduit (13) secondaire pour du gaz liquéfié,
dans lequel le robinet (6) de réglage du débit est commandé par l'unité de commande sur la base d'une valeur de mesure du débitmètre (8) pour du gaz, lorsque le conduit (5) principal pour du gaz liquéfié est choisi par la vanne (15) de commutation et le robinet (6) de réglage du débit est commandé par l'unité de commande sur la base d'une valeur de mesure du débitmètre (17) pour du liquide, lorsque le conduit (13) secondaire pour du gaz liquéfié est choisi par la vanne (15) de commutation.

7. Procédé perfectionné pour un dispositif (1) de vaporisation de gaz liquéfié, qui comprend :
un conduit (5) principal pour du gaz liquéfié pour conduire du gaz liquéfié ;
un vaporisateur (3) pour vaporiser le gaz liquéfié provenant du conduit (5) principal pour du gaz liquéfié ;
un conduit (7) de sortie du gaz pour conduire le gaz vaporisé dans le vaporisateur (3) ;
un débitmètre (8) pour du gaz, qui est prévu dans le conduit (7) de sortie du gaz ;
un robinet (6) de réglage de débit, qui est prévu dans le conduit (5) principal pour du gaz liquéfié, afin de régler le débit du gaz liquéfié conduit au vaporisateur (3) ;
une unité de commande pour commander le robinet (6) de réglage du débit,
le procédé comprenant :
monter un conduit (13) secondaire pour du gaz liquéfié, qui est en bifurcation et en dérivation du conduit (5) principal pour du gaz liquéfié, qui est prévu pour rejoindre le conduit (5) principal pour du gaz liquéfié et qui permet à du liquide liquéfié d'y passer à un débit plus petit que dans le conduit (5) principal pour du gaz liquéfié ;
monter une vanne (15) de commutation pour commuter entre le conduit (5) principal pour du gaz liquéfié et le conduit (13) secondaire pour du gaz liquéfié ;
monter un débitmètre (17) pour du liquide pour mesurer le débit du gaz liquéfié passant dans le conduit (13) secondaire pour du gaz liquéfié et
monter un moyen (19) de réduction de la pression pour réduire la pression du gaz liquéfié passant dans le conduit (13) secondaire pour du gaz liquéfié et
modifier un procédé de commande de l'unité de commande, de manière à ce qu'il commande le robinet (6) de réglage du débit sur la base d'une valeur de mesure du débitmètre (8) pour du gaz, lorsque le conduit (5) principal pour du gaz liquéfié est choisi par la vanne (15) de sélection, et à commander le robinet (6) de réglage du débit sur la base d'une valeur de mesure du débitmètre (17) à liquide, lorsque le conduit (13) secondaire pour du gaz liquéfié est choisi par la vanne (15) de commutation.
